# EUROPÄISCHE PATENTSCHRIFT

(11) **EP 1 092 210 B1**
(45) Veröffentlichungstag und Bekanntmachung des Hinweises auf die Patenterteilung: **27.03.2002**
(21) Anmeldenummer: 99941404.8
(22) Anmeldetag: 29.06.1999
(51) Int. Cl.: G06T 17/00

(54) **VORRICHTUNG UND VERFAHREN ZUR ERSTELLUNG EINES VIRTUELLEN ANLAGENMODELLS**
DEVICE AND METHOD FOR CONSTRUCTING A VIRTUAL INSTALLATION MODEL
DISPOSITIF ET PROCEDE POUR LA REALISATION D'UN MODELE D'INSTALLATION VIRTUEL

(30) Priorität: 30.06.1998 US 109265; 22.07.1998 DE 19832974
(43) Veröffentlichungstag der Anmeldung: 18.04.2001
(73) Patentinhaber: SIEMENS AKTIENGESELLSCHAFT, 80333 München (DE)
(72) Erfinder: MORITZ, Soeren, D-91353 Wimmelbach (DE); FRIEDRICH, Wolfgang, D-91088 Bubenreuth (DE); BANI-HASHEMI, Ali-Reza, Belle Mead, NJ 08502 (US); CRAFT, Nicholas, Columbia, MD 21044 (US); NAVAB, Nassir, Plainsboro, NJ 08536 (US); SAUER, Frank, Princeton, NJ 08540 (US)
(86) Internationale Anmeldenummer: DE9901886
(87) Internationale Veröffentlichungsnummer: WO0002162

(56) Entgegenhaltungen:
- EP-A- 0 782 100
- WO-A-96/34365
- PATENT ABSTRACTS OF JAPAN vol. 1996, no. 05, 31. Mai 1996 (1996-05-31) & JP 08 014860 A (TOSHIBA CORP), 19. Januar 1996 (1996-01-19) -& US 5 819 016 A (WATANABE ET AL.) 6. Oktober 1998 (1998-10-06)
- PATENT ABSTRACTS OF JAPAN vol. 1997, no. 02, 28. Februar 1997 (1997-02-28) & JP 08 263133 A (TOSHIBA CORP), 11. Oktober 1996 (1996-10-11) -& US 5 822 450 A (ARAKAWA ET AL.) 13. Oktober 1998 (1998-10-13)

## Beschreibung

Die Erfindung betrifft eine Vorrichtung sowie ein Verfahren zur Erstellung eines virtuellen Anlagenmodells als Abbild einer realen Anlage.

Bei einer derartigen realen Anlage handelt es sich beispielsweise um eine geplante bzw. eine bereits existierende Industrieanlage, um Maschinen oder um einzelne Baugruppen derselben. In der Praxis ist es dabei häufig der Fall, daß die realen Anlagen mit den ursprünglichen Plänen der Anlage nicht übereinstimmen, da beispielsweise bei der Erstellung der Anlage bereits spezielle Anpassungen oder Nachrüstungen durchgeführt worden sind bzw. deren Pläne nicht die für die datentechnische Weiterbearbeitung notwendigen Informationen enthalten.

Die internationale Anmeldung WO 96/34365 offenbart Verfahren und Vorrichtung zur Rekonstruktion eines dreidimensionalen Objekts aus zweidimensionalen Projektionen dieses Objekts. Diese Rekonstruktion basiert auf der Bestimmung der dreidimensionalen Objektgeometrie aus einer Menge korrespondierender Punktepaare und kann anschließend in einem CAD-System weiterbearbeitet werden.

Die japanische Veröffentlichung JP-A-8 014 860 offenbart Verfahren und Vorrichtung zur Bestimmung der Abweichung zwischen einem gegebenen Modelt mit der Abbildung eines realen Objekts. Zu diesem Zwecke wird aus dem Modell ein Bild erzeugt und dieses mit dem Bild des Objekts verglichen.

Der Erfindung liegt die Aufgabe zugrunde, ein Verfahren und eine Vorrichtung zur einfachen Erstellung eines virtuellen Anlagenmodells als Abbild einer realen Anlage anzugeben.

Diese Aufgabe wird durch eine Vorrichtung zur Erstellung eines virtuellen Anlagenmodells als Abbild einer realen Anlage gelöst, mit einem ersten Speicher zur Speicherung von Bilddaten der realen Anlage, mit einem zweiten Speicher zur Speicherung von Informationsdaten von Anlagenkomponenten einer Komponentenbibliothek, mit einem dritten Speicher zur Speicherung des virtuellen Anlagenmodells und mit einer Auswerte- und Steuervorrichtung zum Vergleich der Informationsdaten der Anlagenkomponenten mit den Bilddaten der realen Anlage, zur Erkennung von Anlagenkomponenten in den Bilddaten, zur Ableitung von Annahmen über Komponenten in den Bilddaten und zur Erzeugung jeweils erkannter Anlagenkomponenten zum virtuellen Anlagenmodell.

Diese Aufgabe wird durch ein Verfahren zur Erstellung eines virtuellen Anlagenmodells als Abbild einer realen Anlage gelöst, bei dem das virtuelle Anlagenmodell aus Bilddaten der realen Anlage dadurch erzeugt wird, daß Anlagenkomponenten einer Komponentenbibliothek mit den Bilddaten der realen Anlage verglichen werden und bei Übereinstimmung eine jeweils erkannte Anlagenkomponente zum virtuellen Anlagenmodell hinzugefügt wird.

Ausgangsbasis für die Erstellung des virtuellen Anlagenmodells sind zwei Datenquellen. Die erste Datenquelle enthält die Bilddaten von der realen Anlage, während die zweite Datenquelle vordefinierte Anlagenkomponenten enthält, die beim Aufbau der Anlage verwendet worden sind. Die Auswerte- und Steuervorrichtung führt eine Bildanalyse durch, d.h. die Informationen der Bilddaten und der vordefinierten Anlagenkomponenten werden gegebenenfalls unter Unterstützung des Anwenders kombiniert und ausgewertet. Sobald eine Anlagenkomponente in den Bilddaten erkannt wird, wird diese einem Abbild für das virtuell erzeugte Anlagenmodell hinzugefügt. Der Anwender kann sich somit basierend auf den Bilddaten für eine reale Anlage und mit Hilfe einer Komponentenbibliothek für die verwendeten Anlagenkomponenten die reale Anlage virtuell nacherzeugen. Er hat hierdurch einen Überblick über die aktuellen Ausrüstungszustände der Anlage, der gegebenenfalls auch bei Änderungen der Anlage auf einen neuen Stand gebracht werden kann.

Eine weitestgehend automatische Betriebsweise der Vorrichtung wird dadurch sichergestellt, daß die Auswerte- und Steuervorrichtung zur Bildanalyse der Bilddaten, der Informationsdaten der Anlagenkomponenten der Komponentenbibliothek, des aktuellen Zustands des virtuellen Anlagenmodells und/oder von Zusatzinformationen eines Anwenders vorgesehen ist.

Die Bildanalyse kann vorteilhafter Weise derart erfolgen, daß die Auswertevorrichtung zur Bildanalyse von Geometrieinformationen der Bilddaten und/oder der Anlagenkomponenten der Komponentenbibliothek vorgesehen ist.

Für eine übersichtliche und umfassende Benutzerführung sowie Bedienoberfläche hat es sich als vorteilhaft erwiesen, daß die Vorrichtung eine Anzeigevorrichtung zur Darstellung von drei Sichten aufweist, wobei die erste Sicht zur Darstellung der auf den Bilddaten beruhenden realen Anlage, die zweite Sicht zur Darstellung der Informationsdaten der Anlagenkomponenten der Komponentenbibliothek und die dritte Sicht zur Darstellung des virtuellen Anlagenmodells vorgesehen sind.

Eine vom Benutzer gesteuerte Erstellung des virtuellen Anlagenmodells kann auf einfache Weise dadurch erfolgen, daß die Auswerte- und Steuervorrichtung zur Steuerung des Aufbaus des virtuellen Anlagenmodells in der Weise vorgesehen ist, daß eine aus der Komponentenbibliothek ausgewählte Anlagenkomponente zur Verschiebung in den zur Darstellung der Bilddaten der realen Anlage zugeordneten ersten Bildschirmbereich vorgesehen ist.

Eine Zuordnung der jeweiligen Anlagenkomponente zu den in den Bilddaten der realen Anlage enthaltenen "realen" Anlagenkomponenten erfolgt vorteilhafter Weise derart, daß die Auswerte- und Steuervorrichtung die ausgewählte und in die erste Sicht verschobene Anlagenkomponente unter Auswertung insbesondere von geometrischen Eigenschaften mit dem im Bild der realen Anlage erkennbaren Komponenten in Einklang bringt und nach erfolgreicher Detektion dieser Komponente zugeordnet wird.

Die Erkennungssicherheit der Anlagenkomponenten kann dadurch weiter erhöht werden, daß der Anlagenkomponente zugeordnete Strukturinformationen, insbesondere geometrische und funktionale zur Zuordnung der Anlagenkomponenten zu den Bilddaten mitausgewertet werden.

Eine übersichtliche und an den jeweiligen Status des Erstellungsprozesses angepaßte Übersicht kann dadurch sichergestellt werden, daß die Auswerte- und Steuervorrichtung zur Hinzufügung einer Anlagenkomponente nach erfolgreicher Erkennung zur dritten Sicht des virtuellen Anlagenmodells vorgesehen ist.

Eine automatische Betriebsweise der Vorrichtung kann dadurch erzielt werden, daß die Auswerte- und Steuervorrichtung zur Steuerung einer Automatikfunktion vorgesehen ist, in der automatisch Anlagenkomponenten ausgewählt, positioniert und ins Anlagenmodell hinzugefügt werden. Die Auswahl der Anlagenkomponenten und deren Zuordnung zu den Bilddaten der realen Anlage bzw. deren Positionierung im virtuellen Anlagenmodell erfolgt dabei soweit erforderlich unter Berücksichtigung Strukturinformationen durch Generierung von Annahmen und Verifizierung der Annahmen durch die Auswerte- und Steuervorrichtung.

Die Bilddatenerfassung der Bilddaten kann dadurch erfolgen, daß zur Erzeugung der digitalen Bilddaten ein digitaler Fotoapparat, eine digitale Videokamera, digitalisierte Aufnahmen und/oder Daten eines CAD-Systems vorgesehen sind.

Eine umfassende Übersicht über die gesamte reale Anlage wird dadurch erzielt, daß zur Erfassung der digitalen Bilddaten der realen Anlage verschiedene Ansichten von der realen Anlage vorgesehen sind, wobei bei Erkennung einer Anlagenkomponente die erkannte Anlagenkomponente allen Bilddaten der Anlage zugeordnet wird.

Im folgenden wird die Erfindung anhand der in den Figuren dargestellten Ausführungsbeispiel näher beschrieben und erläutert.

Es zeigen:
- FIG 1: ein Blockschaltbild mit einer Prinzipdarstellung für eine Vorrichtung zur Erstellung eines Anlagenmodells,
- FIG 2: einen Bildschirmausschnitt mit einem Bildschirmbereich mit einer Digitalaufnahme einer realen Anlage,
- FIG 3: einen Bildschirmausschnitt mit einer ersten Sicht für die reale Anlage und mit einer zweiten Sicht für eine Anlagenkomponente "Tank",
- FIG 4: einen Bildschirmausschnitt mit einer ersten Sicht für die reale Anlage, mit einer zweiten Sicht für die Anlagenkomponente "Tank" und mit einer dritten Sicht für ein virtuelles Anlagenmodell,
- FIG 5: einen Bildschirmausschnitt mit einer ersten Sicht für die reale Anlage, mit einer zweiten Sicht für eine Anlagenkomponente "Ventil",
- FIG 6: einen Bildschirmausschnitt mit einer ersten Sicht für die reale Anlage, mit einer zweiten Sicht für die Anlagenkomponente "Ventil" und mit einer dritten Sicht für die virtuellen Anlage,
- FIG 7: einen Bildschirmausschnitt mit einer ersten Sicht für die reale Anlage, mit einer zweiten Sicht für eine Anlagenkomponente "Rohrleitung" und mit einer dritten Sicht für die virtuelle Anlage,
- FIG 8: einen Bildschirmausschnitt mit einer Sicht für eine Anlagenkomponente "Tank" mit einer weiteren Sicht mit der Anlagenkomponente "Tank" zugeordneten Strukturdaten,
- FIG 9: eines Informations-, Bedien- und Beobachtungssystems auf Basis des virtuellen Anlagenmodells und
- FIG 10: ein Ausführungsbeispiel eines Datenmodells für den Aufbau der Komponentenbibliothek und des virtuellen Anlagenmodells.

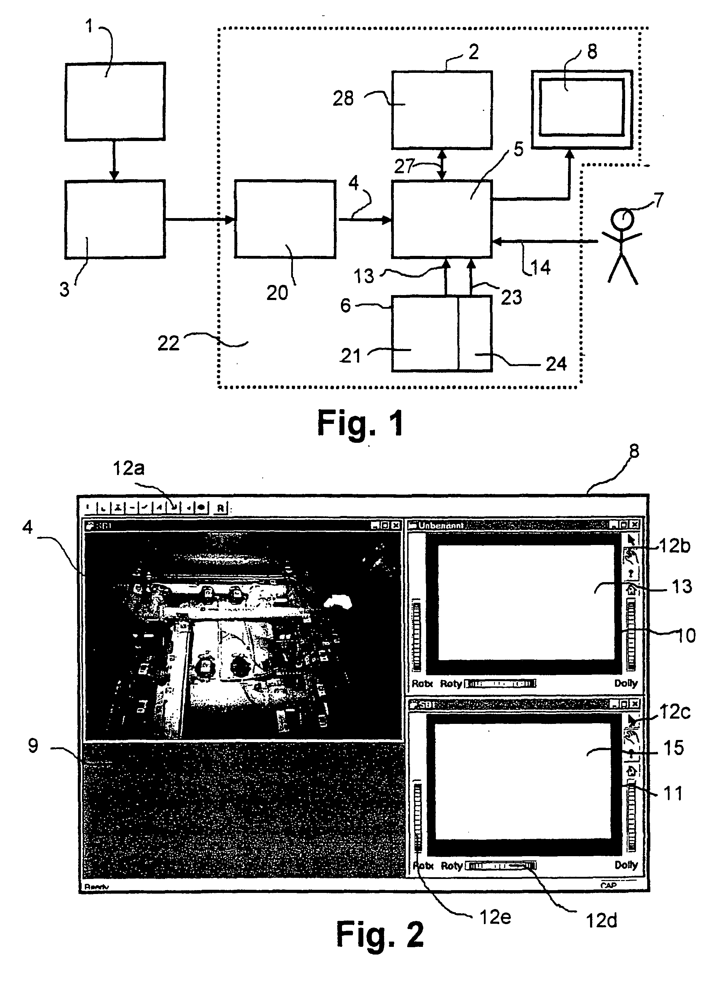

FIG 1 zeigt ein Blockschaltbild für eine Vorrichtung zur Erstellung eines virtuellen Anlagenmodells. Das Bezugszeichen 1 kennzeichnet eine reale Anlage. Mit Hilfe eines Bilderfassungssystems 3 werden von der realen Anlage 1 Bilder erfaßt, die in einem Speicher 20 der Vorrichtung 22 zur Erstellung des virtuellen Anlagenmodells 2 gespeichert werden. Die Bilddaten 4, die im folgenden auch als digitale Bilddaten bezeichnet werden, werden einer Auswerte- und Steuervorrichtung 5 zugeführt. Die Auswerte- und Steuervorrichtung 5 verarbeitet neben den Bilddaten 4 Komponentendaten 13 einer Komponentenbibliothek 6, die in einem zweiten Speicher 21 der Vorrichtung 22 gespeichert sind. Der zweite Speicher 21 der Komponentenbibliothek 6 enthält darüber hinaus einen Speicherteilbereich 24 zur Speicherung von Strukturinformationen 23 der Anlagenkomponenten 6. Mittels des Pfeils 14 ist bei den in FIG 1 dargestellten Ausführungsbeispiels symbolisiert, daß die Auswerte- und Steuervorrichtung 5 auch zur Verarbeitung von Anwenderdaten 14 eines Anwenders 7 in der Lage ist. Die Ausgangsdaten 27 am Ausgang der Auswerte- und Steuervorrichtung 5 dienen als Eingangsdaten für ein virtuelles Anlagenmodell 2. Ein Bildschirm 8 bildet eine Anzeigevorrichtung zur Darstellung der durch die Bilddaten 20 repräsentierten realen Anlage 1, der Anlagenkomponenten 6 sowie des generierten virtuellen Anlagenmodells 2.

Zentrales Element der in FIG 1 dargestellten Vorrichtung 22 zur Erstellung eines virtuellen Abbilds 2 der realen Anlage 1 ist die Steuer- und Auswertevorrichtung 5. Die Steuer- und Auswertevorrichtung 5 führt eine Bildanalyse durch, bei der Geomerieinformationen, welche in den digitalen Bilddaten 4 enthalten sind, erkannt und in Einklang mit den in den Komponenteninformationen 13 enthaltenen Geometrieinformationen gebracht werden. Die Bildanalyse 5 ermittelt gegebenenfalls anwendergesteuert mit Hilfe der Anwenderdaten 14 die Position und Ausrichtung der einzelnen Anlagenkomponenten 13. Der Anwender 7 ist über den Bildschirm 8 in jeder Phase der Erstellung über den aktuellen Status der virtuell erstellten Anlage 2 informiert und kann bei Bedarf in den Erstellungsprozeß unterstützend eingreifen, wie im Zusammenhang mit den Figuren 2 bis 8 noch erläutert wird.

FIG 2 zeigt einen Bildschirmausschnitt, welcher auf dem Bildschirm 8 der in FIG 1 dargestellten Vorrichtung darstellbar ist. In einem ersten Bildschirmbereich 9 ist dabei ein auf digitalen Bilddaten beruhendes digitales Bild 4 der realen Anlage gezeigt, das über die Auswerte- und Steuervorrichtung an den Bildschirm 8 gelangt (vgl. FIG 1). Der Bildschirm 8 weist darüber hinaus sogenannte Iconleisten 12a, 12b, 12c auf, die als Interaktions- und Bedieneroberfläche für den Anwender dienen. Die Iconleisten enthalten jeweils Steuerelemente beispielsweise zur Selektion, zum Greifen und zum Bewegen von Bilddaten und/oder Komponenten. Der rechte Bildschirmbereich enthält im oberen Bildbereich 10 ein Bildschirmfenster 13, welches der Darstellung einzelner Anlagenkomponenten dient. Diese Anlagenkomponenten sind mit Hilfe der Iconleiste 12a auswählbar. Der untere rechte Bildschirmbereich 11 enthält ein drittes Bildschirmfenster 15, welches der Darstellung der virtuellen Anlage, d.h. der Anlagenkomponenten dient, die bereits der "realen" Anlage über Bilddaten - dargestellt im Bildschirmfenster 4 - zugeordnet sind. Darüber hinaus ist über Steuerleisten 12c, 12d eine "Kamerasteuerung", d.h. eine Bewegung der in den Bildschirmbereichen 13, 15 dargestellten Komponenten im 3D-Raum möglich. Anstelle oder zusätzlich zur Iconleiste 12a zur Auswahl der Komponenten kann auf dem Bildschirm 8 auch eine weitere eigene Sicht mit graphisch oder als Objekte dargestellten Komponenten vorgesehen sein.

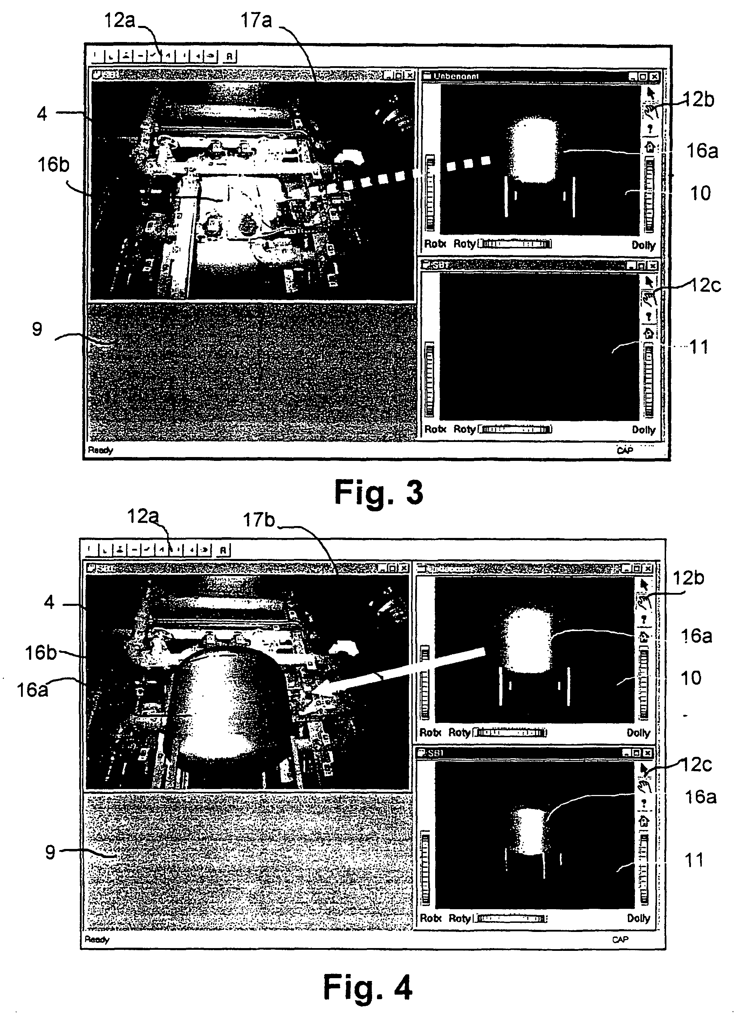

Der in FIG 1 dargestellte Bildschirmausschnitt wird beispielsweise nach Aufruf bestimmter digitaler Bilddaten 4 verwendet und bildet den Einstieg zur Erstellung des virtuellen Anlagenmodells. Bei weniger komplexen Anlagen kann der Anwender ausgehend von der im linken Bildschirmbereich dargestellten "realen" Anlage einen Automatikbetrieb starten, in welchem nacheinander die einzelnen Komponenten der Komponentenbibliothek aufgerufen und die Auswerte- und Steuervorrichtung versucht, diese den digitalen Bilddaten 4 zuzuordnen. Die Auswerte- und Steuervorrichtung wertet dabei nach einem vorgebbaren Suchschlüssel die der jeweils zu plazierenden Komponente zugeordneten Informationsdaten aus. So kann eine erste Auswertung die der Komponente zugehörigen Geometriedaten, eine zweite Auswertung die der Komponente zugeordneten Strukturdaten betreffen. Eine weitere Triggerung bei der Erstellung des virtuellen Anlagenmodells kann anhand der bereits positionierten Komponenten und den noch bestehenden Lücken erfolgen. So kann beispielsweise das Suchschema dadurch eingegrenzt werden, daß im Bereich einer bereits plazierten Komponente "Tank", der die Informationsdaten "Anschlußventil Position xxx" aufweist, lediglich die Komponenten mit der Eigenschaft "Ventil" überprüft werden. Bei komplexeren Anlagenstrukturen erfolgt in der Regel zumindest teilweise ein manueller Betrieb, wie im Zusammenhang mit den Figuren 3 bis 7 noch erläutert wird.

FIG 3 zeigt einen Bildschirmausschnitt mit einer ersten Sicht für die reale Anlage 4 und mit einer zweiten Sicht für eine Anlagenkomponente eines Tanks 16a. Die virtuelle Anlagenkomponente 16a ist das virtuelle Abbild des in den digitalen Bilddaten 4 gezeigten realen Tanks 16b. Die Darstellung im Bildschirmbereich 10 wurde bei den in FIG 3 dargestellten Ausführungsbeispiel mit Hilfe der Menüleiste 12a durch den Anwender durchgeführt. Mittels eines gestrichelt eingezeichneten Pfeiles 17a ist symbolisiert, daß der Anwender die virtuellen Anlagenkomponententanks 16a in den linken Bildschirmbereich der digitalen Bilddaten 4 verschiebt und im Bereich des realen Tanks 16a positioniert. Der Anwender selektiert somit die Anlagenkomponente in der Komponentenansicht 10 und zieht diese auf die Bildsicht 4 (Drag-and-Drop-Verfahren).

FIG 4 zeigt den nächsten Schritt nach einem Fallenlassen der virtuellen Anlagenkomponente 16a im linken Bildschirmbereich der realen Anlage 4. Mit Hilfe des Teils 17b ist symbolisiert, daß die virtuelle Anlagenkomponente 16a in den linken Bildschirmbereich gezogen wurde und im Bereich des realen Tanks 16b fallengelassen wurde. Mit Hilfe der Bildanalyse der Auswerte- und Steuervorrichtung wird versucht, im Umfeld dieser Position die Geometrieeigenschaften der Anlagenkomponente 16a mit Geometrieeigenschaften des Bildschirmausschnitts in Einklang zu bringen. Hierbei werden beispielsweise Kanten bzw. Kombinationen von Kanten ausgewertet. Nach erfolgreicher Auswertung wird die Anlagenkomponente 16a bezüglich Position und Ausrichtung den digitalen Bilddaten 4 zugeordnet und entsprechend gekennzeichnet. Gleichzeitig erfolgt im rechten unteren Bildschirmausschnitt 11 eine sogenannte Instanzierung der virtuellen Anlagenkomponente 16a im virtuellen Anlagenmodell. Damit erscheint das virtuelle Anlagenobjekt 16a in der im Bildschirmbereich 11 dargestellten Anlagensicht.

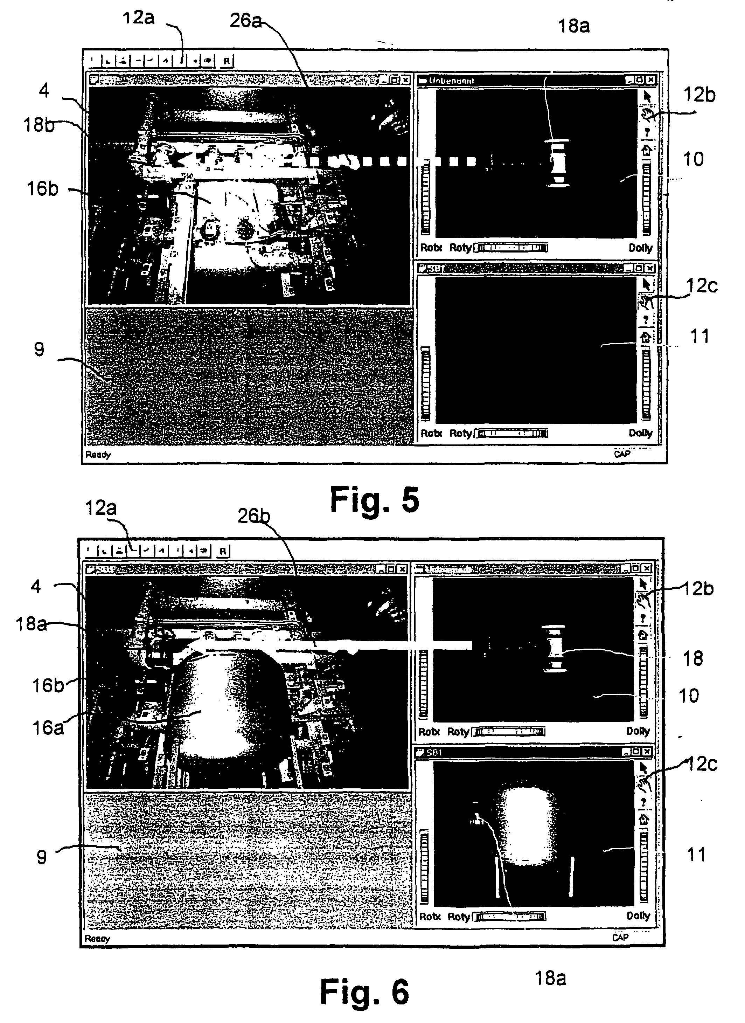

FIG 5 zeigt ein weiteres Beispiel für eine Plazierung einer Anlagenkomponente im Bereich der digitalen Bilddaten 4. Hierzu ist im rechten oberen Bildschirmbereich 10 ein Ventil 18a dargestellt, welches mittels der Menüleiste 12a aus der Anlagenkomponentenbibliothek aktiviert wurde. Mit Hilfe der Menüleiste 12b wird das Ventil 18a auf der durch den Pfeil 26a gestrichelt gekennzeichneten Linie in Richtung des realen Ventils 18b geführt und dort fallengelassen.

FIG 6 zeigt das im linken Bildschirmbereich 9 fallen gelassene virtuelle Ventil 18a, wobei zusätzlich auch der bereits erkannte und plazierte virtuelle Tank 16a dargestellt ist. In der rechten unteren Bildschirmebene 11 ist die so entstehende virtuelle Anlagensicht, bestehend aus virtuellem Anlagentank 16a und virtuellem Ventil 18a dargestellt. Sofern die Positionierung einer Anlagenkomponente nicht automatisch erfolgen kann, so kann die Positionierung und Ausrichtung der Anlagenkomponente auch vom Anwender vorgenommen werden. Hierbei werden im Bild analysierte Geometrieeigenschaften in Einklang mit den Geometrieeigenschaften der Anlagenkomponente gesetzt. Dadurch wird die Position und Ausrichtung der Anlagenkomponente festgelegt. Sofern die in einer Bildansicht der digitalen Bilddaten 4 vorhandene Geometrieinformation nicht für eine Zuordnung ausreicht, so kann versucht werden, die Zuordnung der jeweiligen Anlagenkomponente über andere Darstellungsbilder in Form digitaler Bilddaten 4 zu erzielen.

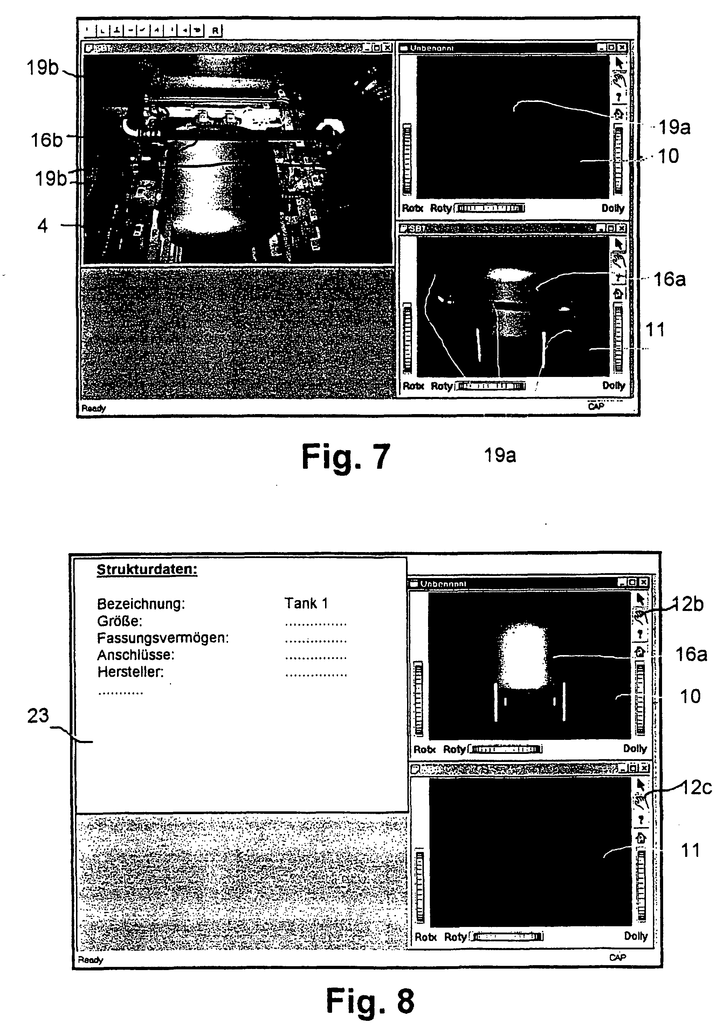

FIG 7 zeigt als weiteres Beispiel die Zuordnung einer Rohrleitung 19a zu den in der linken Bildansicht der digitalen Bilddaten 4 gezeigten realen Anlage. Im rechten unteren Bildschirmausschnitt 11 ist erkennbar, welche Anlagenkomponenten bereits in der virtuellen Ansicht der Anlage detektiert worden sind.

FIG 8 zeigt am Beispiel einer virtuellen Anlagenkomponente 16a, welche im rechten oberen Bildschirmausschnitt 10 dargestellt ist, die Zuordnung weiterer Strukturdaten 23, welche im linken Bildschirmbereich dargestellt sind. Diese Strukturdaten beinhalten beispielsweise Angaben zur Größe und zu den Anschlußmöglichkeiten des Tanks 16a. Die Strukturdaten 23 können bei der Zuordnung des Tanks zu den digitalen Bilddaten mitausgewertet werden und so eine Ausrichtung und Positionierung der jeweiligen Anlagenkomponente unterstützen. Die Strukturdaten werden dabei beispielsweise dazu verwendet, Annahmen zu generieren, wie eine weitere Komponente beschaffen sein könnte und/oder wo eine weitere Komponente liegen könnte.

Damit eine effektive Funktionalität des virtuellen Anlagenmodells erzielt wird, enthalten die einzelnen Anlagenkomponenten des Anlagenmodells einen Verweis auf die zum jeweiligen Aufbau verwendeten Bilddaten. Die Anlagenkomponenten kennen dabei neben den Bezug zum jeweiligen Bild auch ihre jeweilige Position im Bild. Die Bilder, d.h. die digitalen Bilddaten enthalten ihrerseits Verweise auf die im Anlagenmodell 11 enthaltenen Komponenten, die einen Bezug zum Bild haben.

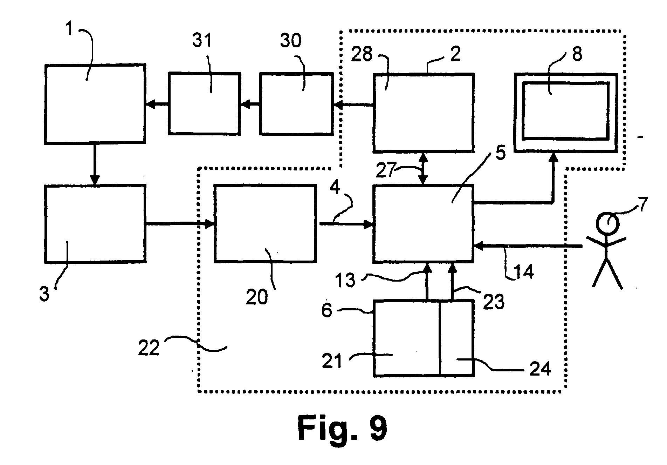

FIG 9 zeigt ein Informations-, Bedien- und/oder Beobachtungssystem 31 auf Basis des mit Hilfe der in FIG 1 dargestellten Vorrichtung 22 erzeugten virtuellen Anlagenmodells 2. Das Informations-, Bedien- und Beobachtungssystem 31, welches im folgenden abkürzend auch als B&B-System bezeichnet wird, ist über einen Konverter 30 mit dem virtuellen Anlagenmodell 2 gekoppelt. Über eine bidirektionale Verbindungsleitung ist das B&B-System darüber hinaus mit der realen Anlage 1 gekoppelt. Die Teile der Vorrichtung 22 zur Erzeugung des virtuellen Anlagenmodells entsprechen denen des in FIG 1 dargestellten Ausführungsbeispiels, so daß bezüglich der Beschreibung der Vorrichtung 22 und deren Bezugszeichen auf die Ausführungen zu FIG 1 verwiesen wird.

Die im virtuellen Anlagenmodell 2 bzw. in den Komponenten der Komponentenbibliothek 6 enthaltene Information 13, 23 kann für unterschiedliche nachgeschaltete Systeme Verwendung finden. Beispielhaft wird hier die Verwendung für Bedien- und Beobachtungssysteme (z.B. WinCC von Siemens) aufgezeigt. Der Konverter 30 extrahiert und wandelt aus dem virtuellen Anlagenmodell 2 die für das Bedien- und Beobachtungssystem 31 relevanten Information um. Ein seperates Engineering des Bedien- und Beobachtungssystem entfällt bzw. wird drastisch reduziert. Das Bedien- und Beobachtungssystem 31 ist mit der realen Anlage 1 verbunden und ist in der Lage, den aktuellen Prozeßzustand anzuzeigen, z.B. mit Hilfe einer auf dem virtuellen Anlagenmodell basierenden 3-dimensionalen Visualisierung. Über die definierten Bedienelemente der Komponenten wird ein Eingriff in den Prozeß ermöglicht.

Weitere Systeme die auf dem virtuellen Anlagenmodell aufsetzen könnten sind z.B. Steuerung, Simulationssystem, Diagnosesystem und Informationssystem.

Der grundlegende Vorteil einer Kopplung des virtuellen Anlagenmodells mit der realen Anlage 1 besteht darin, daß die virtuelle Anlage 2 nicht lediglich einer statischen Visualisierung und Dokumentation der Anlage 1 dient, sondern darüber hinaus eine Vielzahl weiterer realer Funktionen bezüglich Information, Bedienen und Beobachten der realen Anlage übernehmen kann. So können mit Hilfe des virtuellen Anlagenmodells 2, welches ein bezüglich der definierten Funktionen exaktes Abbild der realen Anlage 1 darstellt, beispielsweise gefährliche Bereiche, weit entfernte Bereiche, schwer zugängliche Bereiche etc. ohne Schwierigkeiten mit exakter Visualisierung überwacht werden. Anhand fiktiver Simulationsdaten sind mit Hilfe des virtuellen Anlagenmodells auch Simulationen beispielsweise für Trainingszwecke möglich.

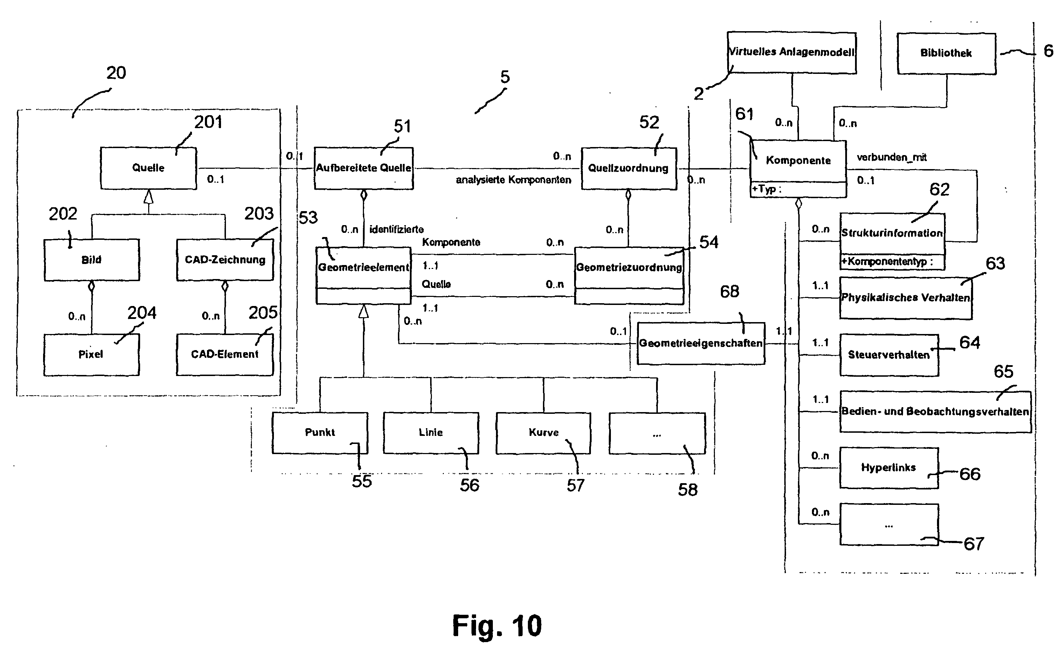

FIG 10 zeigt ein Ausführungsbeispiel eines Datenmodells für den Aufbau der Komponentenbibliothek 6, des virtuellen Anlagenmodells 2 und deren Verknüpfungen, wie er im Zusammenhang mit der in den FIG 1 und 10 dargestellten Vorrichtung 22 verwendet werden kann. Dabei werden soweit dies möglich ist die bereits im Zusammenhang mit den FIG 1 und 9 eingeführten Bezugszeichen verwendet. In einem Bilderspeicher 20 (= erster Speicher 20 in FIG 1 und 9) werden im folgenden auch als Quellen bezeichnete Bilddaten 201, z.B. digitale Bildaufnahmen oder CAD-Zeichnungen, und die damit verbundenen Bildinformationen 202, 203, 204, 205 gespeichert. Die in der Quelle 201 des Bildspeichers 20 enthaltene Information wird von der Auswerte- und Steuervorrichtung 5 in eine aufbereitete Quelle 51 umgewandelt. Für eine Quellzuordnung 52 wird mit Hilfe einer Geometriezuordnung 54 beschrieben, welche Geometrieelemente 53 einer Komponente 61 in Einklang mit Geometrieelementen einer aufbereiteten Quelle gebracht werden konnten. Der zweiten Speicher 6 der Komponentenbibliothek enthält vorgefertigte Komponenten, beispielsweise Tank, Ventile, Rohrleitungen, ... (vgl. Beschreibung FIG 1 bis 9). Der dritte Speicher 2 des virtuelles Anlagenmodells enthält sowohl die Komponenten 61 der virtuellen Anlage, die Information über die aufbereiteten Quellen 51, als auch die Zuordnungsinformation 52 zwischen Komponenten 61 und aufbereiteten Bildern 201.

Das in FIG 10 dargestellte Datenmodell wird mit Hilfe der UML-Notation (Unified Modelling Language) beschrieben. Dabei besitzen die eingesetzte Notation die folgende Semantik. Eine sogenannte Klasse beschreibt eine Informationseinheit, z.B. die Informationseinheit Komponente. Eine Klasse kann ein oder mehrere Attribute besitzen, wobei die Attribute die konkreten Eigenschaften bzw. den Zustand einer Klasse bzw. Instanz festlegen (Attributwerte). So besitzt die Klasse Strukturinformation 62 das Attribut "+Komponententyp". Klassen können Assoziationen (Beziehungen) zu anderen Klassen bzw. zu sich selbst aufbauen. Eine Beziehung beschreibt, welche Zuordnungen zwischen Klassen bestehen im Sinne einer sogenannten Rolle (z. B. analysierte Komponenten) und der Kardinalität (0..n -> kein, ein oder mehrere Zuordnungen).

Über die Raute werden Beziehungen gekennzeichnet, die eine "besteht_aus" Rolle aufbauen zu einer anderen Klasse, z.B. eine Komponente besteht aus Strukturinformation 61, physikalischem Verhalten 63, Steuerverhalten 64. Eine weitere spezielle Beziehung ist die Vererbung, die über ein kleines Dreieck am Ende einer sogenannten Superklasse gekennzeichnet ist. Die Vererbung beschreibt, daß Eigenschaften einer Subklasse von der Superklasse abgeleitet worden sind, die sie Subklasse somit die Eigenschaften der Superklasse erbt. So erben z.B. die Subklassen Punkt 55, Linie 56, Kurve 57 die Eigenschaften der Superklasse Geometrieelement 53. Zu den Eigenschaften gehören neben den Attributen auch die Beziehungen und die nicht näher beschriebenen Methoden einer Klasse. Die in FIG 10 gezeigte Datenstruktur ist in der Lage zwei unterschiedliche Quellen 201 zu verwenden. Beide Quelltypen (Subklassen) beschreiben eine Sicht auf eine abzubildende Anlage. Bild 202 ist ein Quelltyp, der ein digitales Bild repräsentiert, welches sich aus mehreren Pixel 204 zusammensetzt. CAD-Zeichnung 203 ist ein Quelltyp, der eine CAD-Zeichnung 203 repräsentiert, die sich aus CAD-Elementen 205 (Linien, Polygone, Bögen, ... ) zusammensetzt.

Die in einer Quelle 201 enthaltene Information wird von der Auswerte- und Steuervorrichtung 5 in eine aufbereitet Quelle 51 umgewandelt. Dabei werden entweder die Pixel 204 eines Bildes 202 bzw. die CAD-Elemente 205 einer CAD-Zeichnung 203 in Geometrieelemente 53 (z.B. Punkt 55, Linie 56, Kurve 57, ... 58) umgesetzt. Auf Basis der Geometrieelemente 53 kann die Auswerte- und Steuervorrichtung 5 versuchen, ausgewählte Komponenten 61 einer aufbereiteten Quelle 51 zuzuordnen.

Die Auswerte- und Steuervorrichtung versucht - automatisch oder in Interaktion mit dem Anwender - Komponenten in aufbereiteten Quellen 51 - Bilder 202 oder CAD-Zeichnungen 203 - zu identifizieren und dem virtuellen Anlagenmodell 2 hinzuzufügen. Diese Zuordnung erfolgt auf Basis der Geometrieelemente 53, die in einer aufbereiteten Quelle 51 analysiert wurden bzw. den Komponenten 61 über die Geometrieeigenschaften 68 zugeordnet sind.

Konnte eine Komponente 61 einer aufbereiteten Quelle 51 zugeordnet werden, so wird diese Information in der Quellzuordnung 52 hinterlegt. Die Quellzuordnung 52 beschreibt, welche analysierten Komponenten 61 welchen Quellen 201 zugeordnet werden können. Dabei kann eine Komponente 61 über mehreren Quellzuordnungen 52 unterschiedlichen Quellen 201 zugeordnet sein.

Mit Hilfe mehreren Geometriezuordnung 54 wird für eine Quellzuordnung 52 beschrieben, welche Geometrieelemente 53 einer Komponente in Einklang mit Geometrieelemenenten 53 einer aufbereiteten Quelle 51 gebracht werden konnten.

Das virtuelle Anlagenmodell 2 besteht aus den Komponenten, die bereits analysiert werden konnten. Die Informationen des virtuelle Anlagenmodells 2 bzw. der in ihm enthaltenen Komponenten 61 werden von unterschiedlichen nachgeschalteten Systemen, z.B. Bedien- und Beobachtungssystem genutzt.

Zusammenfassend betrifft die Erfindung somit ein Verfahren und eine Vorrichtung zur Erstellung eines virtuellen Anlagenmodells als Abbild einer realen Anlage. Als Datenbasis hierfür dienen einerseits digitale Bilddaten, die Abbilder einer realen Anlage darstellen und andererseits Anlagenkomponenten einer Komponentenbibliothek. Mittels einer Bildanalyse werden die Daten der Anlagenkomponenten sowie die digitalen Bilddaten der realen Anlage ausgewertet. Anhand dieser Auswertung erfolgt eine Zuordnung der jeweils erkannter Anlagenkomponenten zu dem virtuell erzeugten Anlagenmodell. Das so erzeugte virtuelle Abbild der realen Anlage dient der Dokumentation des tatsächlichen Aufbaus der Anlage sowie einer vereinfachten Störungsanalyse in einem Störungsfall. Neben der Speicherung geometrischer Daten können zu den Anlagenkomponenten auch funktionelle Daten etc. gespeichert sein.

## Patentansprüche

1. Vorrichtung (22) zur Erstellung eines virtuellen Anlagenmodells (2) als Abbild einer realen Anlage (1), mit einem ersten Speicher (20) zur Speicherung von Bilddaten (4) der realen Anlage (1), mit einem zweiten Speicher (21) zur Speicherung von Informationsdaten (13, 23) von Anlagenkomponenten (13) einer Komponentenbibliothek (6), mit einem dritten Speicher (28) zur Speicherung des virtuellen Anlagenmodells (2) und mit einer Auswerte- und Steuervorrichtung (5) zum Vergleich der Informationsdaten (13, 23) der Anlagenkomponenten (13) mit den Bilddaten (4) der realen Anlage (1), zur Erkennung von Anlagenkomponenten (13) in den Bilddaten (4), zur Ableitung von Annahmen über Komponenten in den Bilddaten und zur Erzeugung jeweils erkannter Anlagenkomponenten (13) im virtuellen Anlagenmodell (2).

2. Vorrichtung nach Anspruch 1,
**dadurch gekennzeichnet,**
**daß** die Auswerte- und Steuervorrichtung (5) zur Bildanalyse der Bilddaten (4), der Informationsdaten der Anlagenkomponenten (13) der Komponentenbibliothek (6), des aktuellen Zustands des virtuellen Anlagenmodells (2), des aktuellen Zustands des virtuellen Anlagenmodells und/oder von Zusatzinformationen (14) eines Anwenders vorgesehen ist.

3. Vorrichtung nach einem der Ansprüche 1 oder 2,
**dadurch gekennzeichnet,**
**daß** die Auswertevorrichtung (5) zur Bildanalyse (5) von Geometrieinformationen der Bilddaten (4) und/oder der Anlagenkomponenten (13) der Komponentenbibliothek (6) vorgesehen ist.

4. Vorrichtung nach einem der Ansprüche 1 bis 3,
**dadurch gekennzeichnet,**
**daß** die Vorrichtung eine Anzeigevorrichtung (8) zur Darstellung von drei Sichten (9, 10, 11) aufweist, wobei die erste Sicht (9) zur Darstellung der auf den Bilddaten (4) beruhenden realen Anlage, die zweite Sicht (10) zur Darstellung der Informationsdaten (13, 23) der Anlagenkomponenten (13) der Komponentenbibliothek (6) und die dritte Sicht (11) zur Darstellung des virtuellen Anlagenmodells (2) vorgesehen sind.

5. Vorrichtung nach einem der Ansprüche 1 bis 4,
**dadurch gekennzeichnet,**
**daß** die Auswerte- und Steuervorrichtung (5) zur Steuerung des Aufbaus des virtuellen Anlagenmodells (2) in der Weise vorgesehen ist, daß eine aus der Komponentenbibliothek (6) ausgewählte Anlagenkomponente (13) zur Verschiebung in den zur Darstellung der Bilddaten (4) der realen Anlage (1) zugeordneten ersten Bildschirmbereich (9) vorgesehen ist.

6. Vorrichtung nach einem der Ansprüche 1 bis 5,
**dadurch gekennzeichnet,**
**daß** die Auswerte- und Steuervorrichtung (5) die ausgewählte und in den ersten verschobenen Anlagenkomponente unter Auswertung insbesondere von geometrischen Eigenschaften mit dem im Bild der realen Anlage erkennbaren Komponenten in Einklang bringt und nach erfolgreicher Detektion dieser Komponente zugeordnet wird.

7. Vorrichtung nach einem der Ansprüche 1 bis 6,
**dadurch gekennzeichnet,**
**daß** der Anlagenkomponente (13) zugeordnete Strukturinformationen (23), insbesondere geometrische und funktionale Informationen zur Zuordnung der Anlagenkomponenten (13) zu den Bilddaten (4) mitausgewertet werden.

8. Vorrichtung nach einem der Ansprüche 1 bis 7,
**dadurch gekennzeichnet,**
**daß** die Auswerte- und Steuervorrichtung (5) zur Hinzufügung einer Anlagenkomponente (13) nach erfolgreicher Erkennung zur dritten Sicht (11) des virtuellen Anlagenmodells (2) vorgesehen ist.

9. Vorrichtung nach einem der Ansprüche 1 bis 8,
**dadurch gekennzeichnet,**
**daß** die Auswerte- und Steuervorrichtung (5) zur Steuerung einer Automatikfunktion vorgesehen ist, in der automatisch Anlagenkomponenten ausgewählt, positioniert und ins Anlagenmodell (2) hinzugefügt werden.

10. Vorrichtung nach einem der Ansprüche 1 bis 9, **dadurch gekennzeichnet,**
**daß** zur Erzeugung der Bilddaten (4) ein digitaler Fotoapparat, eine digitale Videokamera, digitalisierte Aufnahmen und/oder Daten eines CAD-Systems vorgesehen sind.

11. Vorrichtung nach einem der Ansprüche 1 bis 10,
**dadurch gekennzeichnet,**
**daß** zur Erfassung der Bilddaten (4) der realen Anlage (1) verschiedene Ansichten von der realen Anlage (1) vorgesehen sind.

12. Verfahren zur Erstellung eines virtuellen Anlagenmodells (2) als Abbild einer realen Anlage (1), bei dem das virtuelle Anlagenmodell (2) aus Bilddaten (4) der realen Anlage (1) dadurch erzeugt wird, daß Informationsdaten (13, 23) von Anlagenkomponenten (13) einer Komponentenbibliothek (6) mit den Bilddaten (4) der realen Anlage (1) verglichen werden und bei Übereinstimmung eine jeweils erkannte Anlagenkomponente (13) zum virtuellen Anlagenmodell (2) hinzugefügt wird.

13. Verfahren nach Anspruch 12,
**dadurch gekennzeichnet,**
**daß** die Bilddaten (4) und die Daten der Anlagenkomponenten (13) der Komponentenbibliothek (6) einer Bildanalyse (5) unterzogen werden, bei der die Informationen der Bilddaten (4), der Anlagenkomponenten (13) und/oder Informationen (14) eines Anwenders (7) ausgewertet werden.

14. Verfahren nach einem der Ansprüche 12 oder 13,
**dadurch gekennzeichnet,**
**daß** bei der Bildanalyse (5) Geometrieinformationen der Bilddaten (4) und/oder der Anlagenkomponenten (13) der Komponentenbibliothek (6) ausgewertet werden.

15. Verfahren nach einem der Ansprüche 12 bis 14,
**dadurch gekennzeichnet,**
**daß** bei der Erstellung des virtuellen Anlagenmodells (2) auf einer Anzeigevorrichtung (8) drei Sichten (9, 10, 11) dargestellt werden, wobei die erste Sicht (9) zur Darstellung der Bilddaten (4) der realen Anlage, die zweite Sicht (10) zur Darstellung der Anlagenkomponenten (13) der Komponentenbibliothek (6) und die dritte Sicht (11) zur Darstellung des virtuellen Anlagenmodells (2) vorgesehen sind.

16. Verfahren nach einem der Ansprüche 12 bis 15,
**dadurch gekennzeichnet,**
**daß** zum Aufbau des virtuellen Anlagenmodells (2) aus der Komponentenbibliothek (6) eine Anlagenkomponente (13) ausgewählt wird, daß die ausgewählte Anlagenkomponente (13) in den Bildschirmbereich (9), der der Darstellung der realen Anlage zugeordnet ist, verschoben wird.

17. Verfahren nach einem der Ansprüche 12 bis 16,
**dadurch gekennzeichnet,**
**daß** die Bildanalyse (5) die verschobene Anlagenkomponente (16a) unter Auswertung insbesondere von geometrischen Eigenschaften mit einer im Bild der realen Anlage (1) erkennbaren Komponente (16b) in Einklang bringt und nach erfolgreicher Detektion diese Komponenten einander zugeordnet werden.

18. Verfahren nach einem der Ansprüche 12 bis 17,
**dadurch gekennzeichnet,**
**daß** der virtuellen Anlagenkomponente (16a) Strukturinformationen (23) zugeordnet sind, die zur Zuordnung der Anlagenkomponenten (13) zu den Bilddaten (4) mitausgewertet werden.

19. Verfahren nach einem der Ansprüche 12 bis 18,
**dadurch gekennzeichnet,**
**daß** nach erfolgreicher Erkennung einer Komponente die erkannte Komponente in der dritten Sicht (11) des virtuellen Anlagenmodells (2) hinzugefügt wird.

20. Verfahren nach einem der Ansprüche 12 bis 19,
**dadurch gekennzeichnet,**
**daß** das Verfahren eine automatische Bildanalyse aufweist, in der automatisch Anlagenkomponenten ausgewählt, positioniert und ausgewählt werden.

21. Verfahren nach einem der Ansprüche 12 bis 20,
**dadurch gekennzeichnet,**
**daß** die Bilddaten (4) mittels eines digitalen Fotoapparats, mittels einer digitalen Videokamera, mittels digitalisierter Aufnahmen und/oder mittels Daten eines CAD-Systems erzeugt werden.

22. Verfahren nach einem der Ansprüche 12 bis 21,
**dadurch gekennzeichnet,**
**daß** Bilddaten (4) verschiedener Ansichten der realen Anlage verwendet werden, wobei bei erfolgreicher Erkennung einer Anlagenkomponente (13) eine automatische Zuordnung der erkannten Anlagenkomponente (13) zu den Bilddaten der verschiedenen Ansichten erfolgt.

## Claims

1. Apparatus (22) for creating a virtual system model (2) as an image of a real system (1), with a first memory (20) for storing image data (4) about the real system (1), with a second memory (21) for storing information data (13, 23) about system components (13) of a component library (6), with a third memory (28) for storing the virtual system model (2) and with an evaluation and control apparatus (5) for comparing the information data (13, 23) about the system components (13) with the image data (4) about the real system (1), for identifying system components (13) in the image data (4), for deriving assumptions about components in the image data and for creating identified system components (13) in each case in the virtual system model (2).

2. Apparatus according to Claim 1, **characterised in that** the evaluation and control apparatus (5) is provided for image analysis of the image data (4), of the information data about the system components (13) of the component library (6), of the current status of the virtual system model (2), of the current status of the virtual system model and/or of additional information (14) about a user.

3. Apparatus according to one of Claims 1 or 2, **characterised in that** the evaluation apparatus (5) is provided for image analysis (5) of geometric information about the image data (4) and/or about the system components (13) of the component library (6).

4. Apparatus according to one of Claims 1 to 3, **characterised in that** the apparatus has a display apparatus (8) for displaying three views (9, 10, 11), whereby the first view (9) is provided for display of the real system based on the image data (4), the second view (10) for display of the information data (13, 23) about the system components (13) of the component library (6) and the third view (11) for display of the virtual system model (2).

5. Apparatus according to one of Claims 1 to 4, **characterised in that** the evaluation and control apparatus (5) is provided for controlling the structure of the virtual system model (2) such that a system component (13) selected from the component library (6) can be moved to the first screen area (9) assigned for display of the image data (4) about the real system (1).

6. Apparatus according to one of Claims 1 to 5, **characterised in that** the evaluation and control apparatus (5) aligns the system component selected and moved to the first view with the components identifiable in the image of the real system, evaluating geometric characteristics in particular, and following successful detection assigns it to this component.

7. Apparatus according to one of Claims 1 to 6, **characterised in that** the structural information (23) assigned to the system component (13), in particular geometric and functional information for assigning the system components (13) to the image data (4), is evaluated at the same time.

8. Apparatus according to one of Claims 1 to 7, **characterised in that** the evaluation and control apparatus (5) is provided for adding a system component (13) to the third view (11) of the virtual system model (2) following successful identification.

9. Apparatus according to one of Claims 1 to 8, **characterised in that** the evaluation and control apparatus (5) is provided for controlling an automatic function in which system components are automatically selected, positioned and added to the system model (2).

10. Apparatus according to one of Claims 1 to 9, **characterised in that** for the creation of the image data (4) a digital camera, a digital video camera, digitised recordings and/or data of a CAD system are provided.

11. Apparatus according to one of Claims 1 to 10, **characterised in that** for the creation of the image data (4) about the real system (1) different views of the real system (1) are provided.

12. Method for creating a virtual system model (2) as an image of a real system (1), in which the virtual system model (2) is created from image data (4) about the real system (1) by comparing information data (13, 23) about system components (13) of a component library (6) with the image data (4) about the real system (1) and, if a match is found, by adding a system component (13) identified in each case to the virtual system model (2).

13. Method according to Claim 12, **characterised in that** the image data (4) and the data about the system components (13) of the component library (6) undergo an image analysis (5), in which the information about the image data (4), about the system components (13) and/or information (14) about a user (7) is evaluated.

14. Method according to one of Claims 12 or 13, **characterised in that** during the image analysis (5) geometric information about the image data (4) and/or about the system components (13) of the component library (6) is evaluated.

15. Method according to one of Claims 12 to 14, **characterised in that** during creation of the virtual system model (2) three views (9, 10, 11) are displayed on a display apparatus (8), whereby the first view (9) is provided for display of the image data (4) about the real system, the second view (10) for display of the system components (13) of the component library (6) and the third view (11) for display of the virtual system model (2).

16. Method according to one of Claims 12 to 15, **characterised in that** in order to construct the virtual system model (2) from the component library (6) a system component (13) is selected, and that the selected system component (13) is moved to the screen area (9) which is assigned to the display of the real system.

17. Method according to one of Claims 12 to 16, **characterised in that** the image analysis (5) aligns the moved system component (16a) by evaluating in particular geometric characteristics with a component (16b) identifiable in the image of the real system (1) and that following successful detection these components are assigned to one another.

18. Method according to one of Claims 12 to 17, **characterised in that** structural information (23) is assigned to the virtual system component (16a) and can be evaluated at the same time for assignment of the system components (13) to the image data (4).

19. Method according to one of Claims 12 to 18, **characterised in that** following successful identification of a component the identified component is added to the third view (11) of the virtual system model (2).

20. Method according to one of Claims 12 to 19, **characterised in that** the method has an automatic image analysis in which system components are automatically selected, positioned and added.

21. Method according to one of Claims 12 to 20, **characterised in that** the image data (4) is created using a digital camera, a digital video camera, digitised recordings and/or data of a CAD system.

22. Method according to one of Claims 12 to 21, **characterised in that** image data (4) about different views of the real system is used, whereby if a system component (13) is successfully identified, the identified system component (13) is automatically assigned to the image data of the different views.

## Revendications

1. Dispositif (22) pour l'élaboration d'un modèle d'installation virtuel (2) comme image d'une installation réelle (1), comprenant une première mémoire (20) pour la mémorisation de données d'images (4) de l'installation réelle (1), comprenant une deuxième mémoire (21) pour la mémorisation de données d'informations (13, 23) d'éléments d'installation (13) d'une bibliothèque d'éléments (6), comprenant une troisième mémoire (28) pour la mémorisation du modèle d'installation virtuel (2) et comprenant un dispositif d'évaluation et de commande (5) pour la comparaison des données d'informations (13, 23) des éléments d'installation (13) aux données d'images (4) de l'installation réelle (1), pour la reconnaissance d'éléments d'installation (13) dans les données d'images (4), pour la déduction de suppositions sur des éléments dans les données d'images et pour la production respectivement d'éléments d'installation reconnus (13) dans le modèle d'installation virtuel (2).

2. Dispositif selon la revendication 1,
**caractérisé par le fait que** le dispositif d'évaluation et de commande (5) est prévu pour l'analyse d'image des données d'images (4), des données d'informations des éléments d'installation (13) de la bibliothèque d'éléments (6), de l'état actuel du modèle d'installation virtuel (2) et/ou d'informations supplémentaires (14) d'un utilisateur.

3. Dispositif selon l'une des revendications 1 ou 2,
**caractérisé par le fait que** le dispositif d'évaluation (5) est prévu pour l'analyse d'image (5) d'informations géométriques des données d'images (4) et/ou des éléments d'installation (13) de la bibliothèque d'éléments (6).

4. Dispositif selon l'une des revendications 1 à 3,
**caractérisé par le fait que** le dispositif comporte un dispositif d'affichage (8) pour la représentation de trois vues (9, 10, 11), la première vue (9) étant prévue pour représenter l'installation réelle reposant sur les données d'image (4), la deuxième vue (10) étant prévue pour représenter les données d'informations (13, 23) des éléments d'installation (13) de la bibliothèque d'éléments (6) et la troisième vue (11) étant prévue pour représenter le modèle d'installation virtuel (2).

5. Dispositif selon l'une des revendications 1 à 4,
**caractérisé par le fait que** le dispositif d'évaluation et de commande (5) est prévu pour la commande de la construction du modèle d'installation virtuel (2) de telle sorte qu'un élément d'installation (13) sélectionné dans la bibliothèque d'éléments (6) est prévu pour le déplacement dans la première zone d'écran (9) associée à la représentation des données d'images (4) de l'installation réelle (1).

6. Dispositif selon l'une des revendications 1 à 5,
**caractérisé par le fait que** le dispositif d'évaluation et de commande (5) amène à coïncider l'élément d'installation sélectionné et déplacé dans la première zone d'écran, en évaluant notamment des propriétés géométriques, avec l'élément reconnaissable dans l'image de l'installation réelle et que, une fois la détection réussie, ces éléments sont associés l'un à l'autre.

7. Dispositif selon l'une des revendications 1 à 6,
**caractérisé par le fait que** des informations de structure (23) associées à l'élément d'installation (13), notamment des informations géométriques et fonctionnelles, sont évaluées en même temps pour l'association des éléments d'installation (13) aux données d'images (4).

8. Dispositif selon l'une des revendications 1 à 7,
**caractérisé par le fait que** le dispositif d'évaluation et de commande (5) est prévu pour l'ajout d'un élément d'installation (13), une fois la reconnaissance réussie, à la troisième vue (11) du modèle d'installation virtuel (2).

9. Dispositif selon l'une des revendications 1 à 8,
**caractérisé par le fait que** le dispositif d'évaluation et de commande (5) est prévu pour la commande d'une fonction automatique dans laquelle des éléments d'installation sont automatiquement sélectionnés, positionnés et ajoutés dans le modèle d'installation (2).

10. Dispositif selon l'une des revendications 1 à 9,
**caractérisé par le fait que**, pour produire les données d'images (4), il est prévu un appareil photographique numérique, une caméra vidéo numérique, des prises de vue et/ou des données numérisées d'un système CAD.

11. Dispositif selon l'une des revendications 1 à 10,
**caractérisé par le fait que**, pour la saisie des données d'images (4) de l'installation réelle (1), il est prévu différentes vues de l'installation réelle (1).

12. Procédé pour l'élaboration d'un modèle d'installation virtuel (2) comme image d'une installation réelle (1), dans lequel on produit le modèle d'installation virtuel (2) à partir de données d'images (4) de l'installation réelle (1) en comparant des données d'informations (13, 23) d'éléments d'installation (13) d'une bibliothèque d'éléments (6) aux données d'images (4) de l'installation réelle (1) et, lors d'une coïncidence, on ajoute un élément d'installation respectivement reconnu (13) au modèle d'installation virtuel (2).

13. Procédé selon la revendication 12,
**caractérisé par le fait qu'**on soumet les données d'images (4) et les données des éléments d'installation (13) de la bibliothèque d'éléments (6) à une analyse d'image (5) lors de laquelle on évalue les informations des données d'images (4), des éléments d'installation (13) et/ou des informations (14) d'un utilisateur (7).

14. Procédé selon l'une des revendications 12 ou 13,
**caractérisé par le fait que**, lors de l'analyse d'image (5), on évalue des informations géométriques des données d'images (4) et/ou des éléments d'installation (13) de la bibliothèque d'éléments (6).

15. Procédé selon l'une des revendications 12 à 14,
**caractérisé par le fait que**, lors de l'élaboration du modèle d'installation virtuel (2), on représente trois vues (9, 10, 11) sur un dispositif d'affichage (8), la première vue (9) étant prévue pour représenter les données d'image (4) de l'installation réelle, la deuxième vue (10) étant prévue pour représenter les éléments d'installation (13) de la bibliothèque d'éléments (6) et la troisième vue (11) étant prévue pour représenter le modèle d'installation virtuel (2).

16. Procédé selon l'une des revendications 12 à 15,
**caractérisé par le fait que**, pour construire le modèle d'installation virtuel (2), on sélectionne un élément d'installation (13) dans la bibliothèque d'éléments (6) et on déplace l'élément d'installation (13) sélectionné dans la zone d'écran (9) qui est associée à la représentation de l'installation réelle.

17. Procédé selon l'une des revendications 12 à 16,
**caractérisé par le fait que** l'analyse d'image (5) amène à coïncider l'élément d'installation déplacé (16a), en évaluant notamment des propriétés géométriques, avec un élément (16b) reconnaissable dans l'image de l'installation réelle (1) et que, une fois la détection réussie, ces éléments sont associés l'un à l'autre.

18. Procédé selon l'une des revendications 12 à 17,
**caractérisé par le fait qu'**il est associé à l'élément d'installation virtuel (16a) des informations de structure (23) qui sont évaluées en même temps pour l'association des éléments d'installation (13) aux données d'images (4).

19. Procédé selon l'une des revendications 12 à 18,
**caractérisé par le fait que**, après avoir réussi la détection d'un élément, on ajoute l'élément reconnu dans la troisième vue (11) du modèle d'installation virtuel (2).

20. Procédé selon l'une des revendications 12 à 19,
**caractérisé par le fait que** le procédé comporte une analyse d'image automatique dans laquelle des éléments d'installation sont automatiquement sélectionnés, positionnés et ajoutés dans le modèle d'installation virtuel (2).

21. Procédé selon l'une des revendications 12 à 20,
**caractérisé par le fait qu'**on produit les données d'images (4) au moyen d'un appareil photographique numérique, d'une caméra vidéo numérique, de prises de vue et/ou de données numérisées d'un système CAD.

22. Procédé selon l'une des revendications 12 à 21,
**caractérisé par le fait qu'**on utilise des données d'images (4) de différentes vues de l'installation réelle et, après avoir réussi la reconnaissance d'un élément d'installation (13), on effectue une association automatique de l'élément d'installation reconnu (13) aux données d'images des différentes vues.
